# FASCICULE DE BREVET EUROPEEN

(11) **EP 3 803 813 B1**
(45) Date de publication et mention de la délivrance du brevet: **10.04.2024**
(21) Numéro de dépôt: 19730282.1
(22) Date de dépôt: 03.06.2019
(51) Int. Cl.: G07F 7/08, G06F 3/04883, G06F 1/16, G09B 21/00, G07F 7/10, G06F 21/31

(54) **DISPOSITIF ET PROCÉDÉ POUR L'IDENTIFICATION SÉCURISÉE D'UN UTILISATEUR**
VORRICHTUNG UND VERFAHREN ZUR SICHEREN IDENTIFIZIERUNG EINES BENUTZERS
DEVICE AND METHOD FOR SECURE IDENTIFICATION OF A USER

(30) Priorité: 04.06.2018 BE 201805367
(43) Date de publication de la demande: 14.04.2021
(73) Titulaire: Ingenico Belgium, 1130 Bruxelles (BE)
(72) Inventeur: YOUSSEF, Mohamed Amine, 1831 MACHELEN (BE); BAESENS, Pierrot, 1600 SINT-PIETERS-LEEUW (BE)
(74) Mandataire: LLR
(86) Numéro de dépôt international: PCT/EP2019/064300
(87) Numéro de publication internationale: WO 2019/233931

(56) Documents cités:
- US-A- 6 061 666
- US-A1- 2016 224 113
- US-A1- 2017 269 828
- US-A1- 2018 095 588
- US-B2- 8 251 286
- WILLIAM GRUSSENMEYER ET AL: "Accessible Touchscreen Technology for People with Visual Impairments", ACM TRANSACTIONS ON ACCESSIBLE COMPUTING (TACCESS), ACM, 2 PENN PLAZA, SUITE 701 NEW YORK NY 10121-0701 USA, vol. 9, no. 2, 17 janvier 2017 (2017-01-17), pages 1-31, XP058309464, ISSN: 1936-7228, DOI: 10.1145/3022701

## Description

### DOMAINE TECHNIQUE DE L'INVENTION

La présente invention concerne le domaine de l'authentification et/ou du contrôle de l'identité d'un utilisateur qui demande un service ou qui procède à une transaction, plus précisément l'invention concerne un dispositif et un procédé pour identifier une personne et qui convient également aux personnes malvoyantes.

### ARRIERE-PLAN TECHNOLOGIQUE DE L'INVENTION

L'objectif de l'invention consiste à augmenter la sécurité lorsqu'un utilisateur entre un code d'identification tel que, par exemple, un code PIN, sur un écran tactile.

Généralement, l'écran affiche un clavier d'identification personnelle avec une valeur numérique ou autre pour chaque touche et l'utilisateur sélectionne chaque touche correspondant à chaque valeur de chaque chiffre du code PIN.

Pendant cette opération, n'importe quel tiers peut observer et mémoriser jusqu'à 12 chiffres (généralement 4 ou 6 chiffres) du code PIN, ce qui permet ensuite à un tiers fraudeur de combiner ces informations avec d'autres pour effectuer un retrait frauduleux sur le compte.

Un exemple de l'inconvénient de cette solution est représenté par le document EP 2 791 845.

Jusqu'à présent, les fabricants de terminaux équipaient la partie affichée d'une protection contre la possibilité d'observer les valeurs des touches. Cette solution n'est pas complètement efficace et présente l'inconvénient d'augmenter le volume du terminal.

Une autre tentative pour résoudre ce problème consistait, selon le document US 8 392 846, à afficher un clavier d'identification personnelle virtuel à des emplacements variables sur un écran tactile afin d'empêcher la fraude ou l'interception de l'identification personnelle. Cependant, une caméra pourrait néanmoins observer chaque étape et, en revoyant les images, un tiers fraudeur pourrait accéder aux informations. La solution de la présente invention est capable de pallier cet inconvénient.

D'autres dispositifs et méthodes de saisie des codes PIN pour les utilisateurs malvoyants sont connus des documents US2017/269828A1, US2018/095588A1 et US2016/224113A1.

### DESCRIPTION GENERALE DE L'INVENTION

La présente invention a pour but de pallier certains inconvénients de l'art antérieur en proposant des moyens pour l'authentification ou le contrôle sécurisé de l'identité de personnes, y compris de personnes malvoyantes.

Cet but est atteint par un terminal portable de paiement ou de point de vente avec un connecteur de fiche pour l'identification sécurisée d'un titulaire de carte, ledit terminal comprenant au moins :
- une première mémoire pour mémoriser une séquence d'instructions représentant un mode d'accessibilité et devant être exécutée par le terminal ;
- un agencement d'authentification pour la mise en oeuvre d'un processus d'authentification pour les titulaires de carte en entrant un code PIN ou une séquence de nombres et de lettres (SNL) ;
- un premier dispositif de détection pour détecter la présence dans le connecteur d'une fiche enfichée pour la connexion d'un casque de titulaire de carte et comprenant un agencement pour produire un signal électrique pour déclencher l'exécution du mode d'accessibilité ;
- un deuxième dispositif de détection pour détecter la position du doigt sur l'écran chaque fois qu'un doigt du propriétaire du casque touche l'écran ;
- un agencement connecté à l'agencement d'authentification pour brouiller et maintenir l'écran en noir pendant toute la séquence du mode d'accessibilité le terminal étant caractérisé en ce que :
- l'agencement d'authentification comprend un programme pour générer au moins une « chaîne de touches » d'un - ensemble de « chaîne de touches » mémorisé dans un « fichier de chaînes » du terminal (1), pour l'entrée du code PIN ou de la SNL, chaque « chaîne de touches » comprenant un ensemble de touches (20), lesdites touches (20) étant réparties de manière aléatoire dans ladite « chaîne de touches » ;
- le deuxième dispositif de détection comprend un agencement pour détecter la longueur, d, du déplacement du doigt sur l'écran et est connecté à l'agencement d'authentification de manière à transmettre un signal correspondant à la longueur d pour indiquer qu'un déplacement a lieu ou non en fonction de la valeur de ladite longueur d comparée à une valeur seuil mémorisée ;
- l'agencement d'authentification comprend un module de tri pour récupérer, lors de la réception du signal indiquant un déplacement, dans le « fichier de chaînes » mémorisé, ladite « chaîne de touches » de manière à attribuer une valeur de touche correspondant à la longueur d du déplacement du doigt, et est connecté à un agencement audio (17) du terminal (1) où des signaux audio préenregistrés correspondant à chaque touche de la « chaîne de touches » sont mémorisés, de manière à sélectionner le son correspondant à la touche attribuée au déplacement et l'émettre par l'intermédiaire du connecteur jack vers le casque du titulaire de carte ;
- il comprend un programme pour réitérer ces actions jusqu'à ce que l'utilisateur écoutant la valeur d'un chiffre ou caractère de son code PIN/de sa SNL retire son doigt de l'écran, la dernière valeur, indiquée en tant que retour, est ensuite mémorisée dans une deuxième mémoire, incluse dans le terminal, en tant que chiffre du code PIN/de la SNL.

Selon une autre caractéristique, le terminal portable de paiement comprend un contrôleur comprenant au moins :
- le deuxième dispositif de détection qui est connecté à l'écran du terminal de manière à capturer et enregistrer, dans une troisième mémoire, les données liées aux positions du doigt lorsque ledit écran est touché ;
- un dispositif de génération de positions, comprenant un agencement pour générer des données correspondant à diverses positions sur l'écran, lesdites diverses positions étant enregistrées dans une quatrième mémoire ;
- un processeur et une cinquième mémoire comprenant un ensemble de programmes exécutés sur ledit processeur de manière à éviter que l'écran tactile n'affiche une « chaîne de touches » avec les positions des touches déterminées par les données générées par le dispositif de génération de positions ;
l'ensemble de programmes de la cinquième mémoire dudit contrôleur comprenant au moins :
- un algorithme de comparaison pour comparer les données correspondant aux régions touchées, enregistrées dans la troisième mémoire, avec les données représentatives de chaque emplacement de l'écran générées par le dispositif de génération de positions et enregistrées dans la quatrième mémoire ;
- un algorithme audio pour produire, dans un casque connecté à la fiche, un signal audible correspondant à la valeur de la touche ;
- un premier algorithme d'itération pour réitérer l'algorithme de comparaison et l'algorithme audio jusqu'à ce que l'utilisateur écoutant la valeur qu'il attend retire le doigt de l'écran, cette action déclenchant dans la mémoire la mémorisation de ladite valeur en tant que premier chiffre ;
- un deuxième algorithme d'itération pour réitérer en outre le premier algorithme d'itération à chaque fois que l'agencement d'authentification reçoit un nouveau signal de détection de contact et tant que la valeur du nombre de chiffres mémorisée est inférieure à la valeur maximum des nombres de chiffres contenus par le code PIN ou d'identification.

Selon une autre caractéristique, le premier dispositif de détection est connecté au processeur du contrôleur de manière à transmettre le signal électrique pour déclencher le mode d'accessibilité.

Selon une autre caractéristique, le processeur du contrôleur est connecté à la première mémoire pour télécharger et exécuter la séquence d'instructions représentant le mode d'accessibilité lors de la réception dudit signal électrique.

Selon une autre caractéristique, le processeur du contrôleur est connecté à l'agencement d'authentification de manière à lui transmettre un signal d'activation lorsque le mode d'accessibilité est actif, l'agencement d'authentification générant la « chaîne de touches » pour l'identification du titulaire de carte après la réception dudit signal d'activation.

Selon une autre caractéristique, le contrôleur transmet un ensemble de données, comprenant au moins les valeurs de position générées par le dispositif de génération de positions, à l'agencement d'authentification, ledit agencement d'authentification générant la « chaîne de touches » à un emplacement de l'écran sur la base dudit ensemble de données.

Selon une autre caractéristique, le deuxième dispositif de détection comprend un agencement pour mesurer le déplacement du doigt sur l'écran à partir d'une position initiale donnée, la longueur du déplacement étant caractérisée par la valeur d, ladite longueur d étant comparée à une valeur seuil mémorisée dans ledit deuxième dispositif de détection et, si la longueur d est supérieure à la valeur seuil, un signal est transmis à l'agencement d'authentification pour indiquer qu'il y a un déplacement du doigt, si au contraire, la longueur d est inférieure à la valeur seuil, le deuxième dispositif de détection considère qu'aucun déplacement du doigt n'a lieu et un signal est transmis à l'agencement d'authentification indiquant qu'il n'y a pas de déplacement du doigt.

Selon une autre caractéristique, l'agencement d'authentification est connecté au deuxième dispositif de détection de manière à récupérer une « chaîne de touches » dans le « fichier de chaînes » lorsque ledit deuxième dispositif de détection détecte le doigt sur l'écran.

Selon une autre caractéristique, lorsque ledit deuxième dispositif de détection détecte un déplacement du doigt sur l'écran, ledit agencement d'authentification attribue à la position du doigt une valeur d'une touche de la « chaîne de touches ».

Selon une autre caractéristique, l'agencement d'authentification comprend un module de désignation de touche qui génère une liste de touches comprenant des informations concernant chaque touche de la « chaîne de touches » et la position associée, ladite liste de touches étant réutilisée par ledit agencement d'authentification si l'utilisateur déplaçant son doigt dans une direction donnée retourne à une position précédente ou dans une autre direction de manière à corriger ou changer un choix de touche.

Selon une autre caractéristique, l'agencement d'authentification comprend un programme qui détermine, en temps réel, à partir des informations contenues dans la liste de touches, la direction du doigt se déplaçant sur l'écran afin de vérifier si l'utilisateur déplace ledit doigt en avant ou en arrière ou dans n'importe quelle orientation.

Selon une autre caractéristique, il comprend un dispositif de comptage connecté à l'agencement d'authentification et à la deuxième mémoire du terminal, ledit dispositif de comptage comptant le nombre de chiffres mémorisés dans la deuxième mémoire et, lorsque ledit nombre de comptage correspond à une valeur prédéterminée enregistrée et représentant le nombre de chiffres du PIN/de la SNL, émettant un signal vers ledit agencement d'authentification de manière à exécuter le processus d'authentification.

Selon une autre caractéristique, le premier dispositif de détection est un commutateur électromécanique.

Selon une autre caractéristique, le premier dispositif de détection est un capteur.

Un autre objet de la présente invention consiste à proposer un processus pour l'authentification sécurisée d'un utilisateur.

Cet but est atteint au moyen d'un procédé pour l'identification sécurisée d'un titulaire de carte avec un terminal portable de paiement ou de point de vente tel que décrit dans la présente demande, ledit procédé comprenant au moins les étapes :
- de détection de la présence d'une fiche enfichée dans le connecteur du terminal pour connecter un casque de titulaire de carte ;
- de déclenchement de l'exécution d'un mode d'accessibilité permettant au titulaire de carte de s'identifier ;
- de détection de la position du doigt du titulaire de carte sur l'écran à chaque fois que l'écran est touché par le titulaire de carte ;
- de brouillage et de maintien de l'écran en noir pendant la séquence du mode d'accessibilité ; U
le procédé étant caractérisé en ce qu'il comprend les étapes :
- de génération d'une « chaîne de touches » comprenant un ensemble de touches ne devant pas être affichées à des positions sur l'écran du terminal pour l'entrée du PIN/de la SNL ;
- de détection de la longueur du déplacement du doigt sur l'écran et de transmission d'un signal correspondant à la longueur d pour indiquer qu'un déplacement a lieu ou non en fonction de la valeur de ladite longueur d comparée à une valeur de seuil mémorisée ;
- de récupération, lors de la réception d'un signal indiquant un déplacement, dans le « fichier de chaînes » mémorisé, de la « chaîne de touches » de manière à attribuer une valeur de touche correspondant à la longueur d du déplacement du doigt, et de sélection, parmi les signaux audio préenregistrés correspondant à chaque touche de la « chaîne de touches », du son correspondant à la touche attribuée au déplacement et d'émission de celui-ci par l'intermédiaire du connecteur jack vers le casque du titulaire de casque ;
- de réitération des étapes de détection et de récupération jusqu'à ce que le doigt soit retiré de l'écran ;
- de mémorisation de la dernière valeur lors du retrait du doigt en tant que chiffre du code PIN/de la SNL.

Selon une autre caractéristique, le procédé pour l'identification sécurisée comprend également au moins les étapes :
- de génération d'un ensemble de données correspondant à diverses positions sur l'écran ;
- de génération de la « chaîne de touches » à un emplacement de l'écran sur la base d'un sous-ensemble de l'ensemble de données de diverses positions généré.

Selon une autre caractéristique, l'étape de détection de la position du doigt sur l'écran comprend au moins la capture et l'enregistrement des données liées à la position du doigt lors du contact avec l'écran.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels :
- les figures 1A, 1B sont respectivement des représentations schématiques des composants du terminal portable de paiement ou de point de vente et du contrôleur, selon un mode de réalisation ;
- les figures 2A, 2B sont des représentations schématiques de l'entrée d'un code PIN sur l'écran brouillé en noir, selon un mode de réalisation ;
- la figure 3 est une représentation schématique de quelques étapes du procédé pour l'identification sécurisée d'un utilisateur au moyen du terminal portable de paiement ou de point de vente.

### DESCRIPTION DES MODES DE REALISATION PREFERES DE L'INVENTION

La présente invention concerne un terminal portable de paiement ou de point de vente (1) pour l'identification sécurisée d'un utilisateur, y compris d'un utilisateur malvoyant, pendant une transaction.

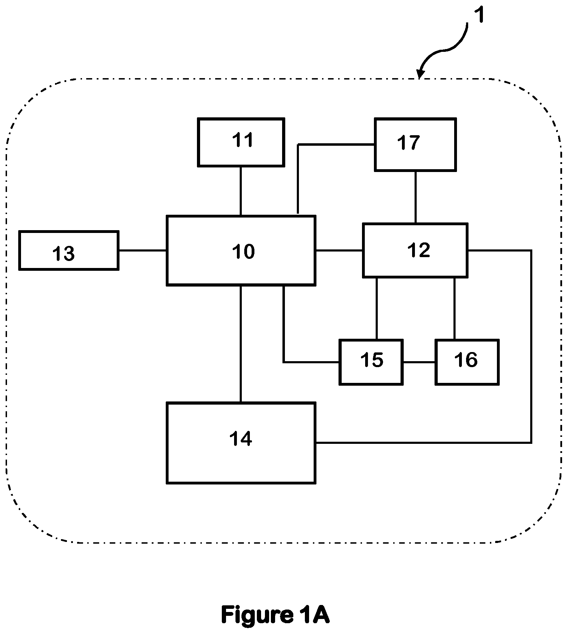

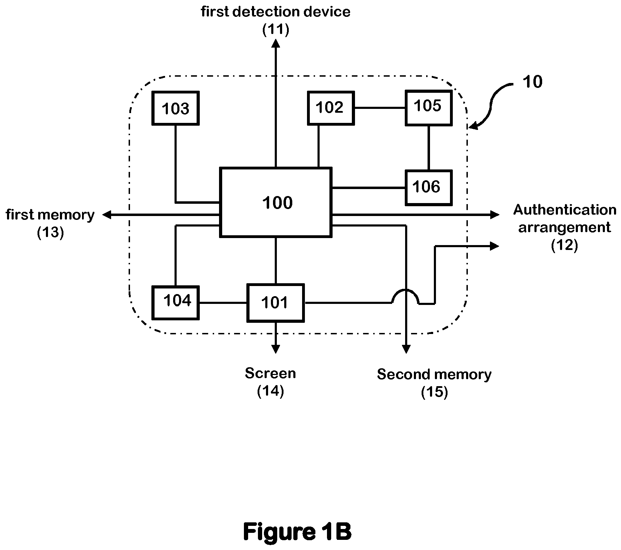

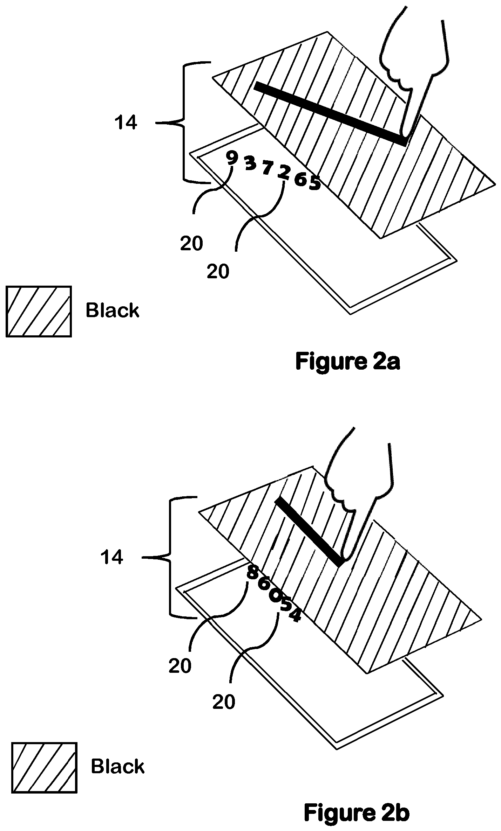

Dans certains modes de réalisation, le terminal portable de paiement ou de point de vente (1, figure 1a) avec un connecteur jack pour l'identification sécurisée d'un titulaire de carte comprend au moins :
- une première mémoire (13) pour mémoriser une séquence d'instructions représentant un mode d'accessibilité et devant être exécutée par le terminal (1),
- un agencement d'authentification (12) pour la mise en oeuvre d'un processus d'authentification pour les titulaires de carte en entrant un code PIN ou une séquence de nombres et de lettres (SNL) ;
- un premier dispositif de détection (11) pour détecter la présence dans le connecteur d'une fiche enfichée pour la connexion d'un casque de titulaire de carte et comprenant un agencement pour produire un signal électrique pour déclencher l'exécution du mode d'accessibilité ;
- un deuxième dispositif de détection (101), comme illustré sur la figure 1b, pour détecter la position du doigt sur l'écran (14) chaque fois qu'un doigt du propriétaire du casque touche l'écran (14);
- un agencement connecté à l'agencement d'authentification (12) pour brouiller et maintenir l'écran (14) en noir pendant toute la séquence du mode d'accessibilité
le terminal (1) étant caractérisé en ce que :
- l'agencement d'authentification (12) comprend un programme pour générer, à chaque fois que le mode d'accessibilité est actif, au moins une « chaîne de touches » d'un ensemble de « chaîne de touches » mémorisé dans un « fichier de chaînes» du terminal (1), pour l'entrée du code PIN ou de la SNL, chaque « chaîne de touches » comprenant un ensemble de touches (20), comme montré sur la figure 2a ou la figure 2b, lesdites touches (20) étant réparties de manière aléatoire dans ladite « chaîne de touches » ;
- le deuxième dispositif de détection (101) comprend un agencement pour détecter la longueur, d, ou l'orientation du déplacement du doigt sur l'écran et est connecté à l'agencement d'authentification (12) de manière à transmettre un signal correspondant à la longueur d ou à l'angle d'orientation pour indiquer qu'un déplacement a lieu ou non en fonction de la valeur de ladite longueur d ou dudit angle d'orientation comparée à une valeur seuil mémorisée ;
- l'agencement d'authentification comprend un module de tri pour récupérer, lors de la réception du signal indiquant un déplacement, dans le « fichier de chaînes » mémorisé, ladite « chaîne de touches » de manière à attribuer une valeur de touche correspondant à la longueur d ou à l'angle d'orientation du déplacement du doigt, et est connecté à un agencement audio (17) du terminal (1) où des signaux audio préenregistrés correspondant à chaque touche de la « chaîne de touches » sont mémorisés, de manière à sélectionner le son correspondant à la touche attribuée au déplacement et l'émettre par l'intermédiaire du connecteur jack vers le casque du titulaire de carte ;
- il comprend un programme pour réitérer ces actions jusqu'à ce que l'utilisateur écoutant la valeur d'un chiffre ou caractère de son code PIN/de sa SNL retire son doigt de l'écran (14), la dernière valeur, indiquée en tant que retour, est ensuite mémorisée dans une deuxième mémoire (15), incluse dans le terminal (1), en tant que chiffre du code PIN/de la SNL.

L'expression « chaîne de touches » signifie ici un nombre de chiffres ou de caractères successifs donné.

La « chaîne de touches » peut comprendre au moins des touches (20) avec des valeurs de 0 à 9 ou des lettres de A à Z, ou les deux. Par exemple, et de manière non limitative, une chaîne générée peut être « 3241569807 ».

A chaque fois que l'utilisateur touche l'écran après un choix d'un chiffre de son code PIN/code, le terminal récupère une nouvelle « chaîne de touches » dans le « fichier de chaînes ».

Une fois qu'une valeur de touche (20) est choisie par l'utilisateur, un geste de double frappe du doigt permet de valider ledit choix.

Il est ainsi évident que le terminal décrit dans la présente demande fournit une manière sécurisée de valider une transaction, étant donné qu'il n'y a pas de touche ou de clavier affiché sur l'écran (14).

De plus, étant donné que l'écran est maintenu en noir et que l'utilisateur doit seulement déplacer son doigt sur l'écran pour sélectionner une touche (20) ou un chiffre, le terminal peut être utilisé à la fois pour des utilisateurs normaux et malvoyants.

Le terme « transaction » signifie ici le paiement d'un produit ou d'un service par exemple.

Dans certains modes de réalisation, le deuxième dispositif de détection (101) comprend un agencement pour mesurer le déplacement ou le mouvement du doigt sur l'écran à partir d'une position ou d'une orientation initiale donnée, la longueur du déplacement ou du mouvement étant caractérisée par la valeur d ou l'angle d'orientation. La longueur d ou l'angle d'orientation est comparé à une valeur seuil mémorisée dans ledit deuxième dispositif de détection (101). Si la longueur d ou l'angle d'orientation est supérieur à la valeur seuil, un signal est transmis à l'agencement d'authentification pour indiquer qu'il y a un déplacement du doigt. Si, au contraire, la longueur d ou l'angle d'orientation est inférieur à la valeur seuil, le deuxième dispositif de détection (101) considère qu'aucun déplacement du doigt n'a lieu, et un signal est transmis à l'agencement d'authentification indiquant qu'il n'y a pas de déplacement du doigt.

Dans certains modes de réalisation, le terminal portable de paiement ou de point de vente (1) comprend un contrôleur (10), comme illustré sur la figure 1b, comprenant au moins :
- le deuxième dispositif de détection (101) qui est connecté à l'écran (14) du terminal (1) de manière à capturer et enregistrer, dans une troisième mémoire (104), les données liées aux positions du doigt lorsque ledit écran (14) est touché ;
- un dispositif de génération de positions (102), comprenant un agencement pour générer des données correspondant à diverses positions sur l'écran (14), lesdites diverses positions étant enregistrées dans une quatrième mémoire (105) ;
- un processeur (100) et une cinquième mémoire (103) comprenant un ensemble de programmes exécutés sur ledit processeur (100) de manière à éviter que l'écran tactile (14) affiche une « chaîne de touches » avec les positions de touches (20) déterminées par les données générées par le dispositif de génération de positions (102) ;
l'ensemble de programmes de la cinquième mémoire dudit contrôleur (10) comprenant au moins :
- un algorithme de comparaison pour comparer les données correspondant aux régions touchées, enregistrées dans la troisième mémoire, avec les données représentatives de chaque emplacement de l'écran générées par le dispositif de génération de positions et enregistrées dans la quatrième mémoire ;
- un algorithme audio pour produire, dans un casque connecté à la fiche, un signal audible correspondant à la valeur de la touche (20) ;
- un premier algorithme d'itération pour réitérer l'algorithme de comparaison et l'algorithme audio jusqu'à ce que l'utilisateur écoutant la valeur qu'il attend retire le doigt de l'écran (14), cette action déclenchant dans la mémoire la mémorisation de ladite valeur en tant que premier chiffre ;
- un deuxième algorithme d'itération pour réitérer en outre le premier algorithme d'itération à chaque fois que l'agencement d'authentification reçoit un nouveau signal de détection de contact et tant que la valeur du nombre de chiffres mémorisée est inférieure à la valeur maximum des nombres de chiffres contenus par le code PIN ou le code d'identification.

Dans certains modes de réalisation, le premier dispositif de détection (11) est connecté au contrôleur (10) de manière à transmettre le signal électrique pour déclencher le mode d'accessibilité.

Dans certains modes de réalisation, le processeur du contrôleur est connecté à la première mémoire pour télécharger et exécuter la séquence d'instructions représentant le mode d'accessibilité lors de la réception dudit signal électrique.

Dans certains modes de réalisation, le contrôleur (10) est connecté à l'agencement d'authentification (12) de manière à lui transmettre un signal d'activation lorsque le mode d'accessibilité est actif, l'agencement d'authentification (12) générant les « chaînes de touches » pour l'identification du titulaire de carte après la réception dudit signal d'activation.

Dans certains modes de réalisation, le contrôleur (10) transmet un ensemble de données, comprenant au moins les valeurs de position générées par le dispositif de génération de positions (102), à l'agencement d'authentification (12), ledit agencement d'authentification (12) générant la « chaîne de touches » à un emplacement de l'écran (14) sur la base dudit ensemble de données.

Dans certains modes de réalisation, l'agencement d'authentification est connecté au deuxième dispositif de détection de manière à récupérer une « chaîne de touches » dans le « fichier de chaînes » lorsque ledit deuxième dispositif de détection (101) détecte le doigt sur l'écran. Lorsque le deuxième dispositif de détection détecte un déplacement ou un mouvement du doigt sur l'écran, ledit agencement d'authentification attribue à la position du doigt une valeur d'une touche (20) de la « chaîne de touches ». Par exemple, et de manière non limitative, lorsque le premier déplacement ou mouvement du doigt est détecté sur l'écran, l'agencement d'authentification attribue la valeur de la première touche (20) de la « chaîne de touches », par exemple « 2 », à la position du doigt et un son ou un signal audio préenregistré correspondant à la touche « 2 » est récupéré dans l'agencement audio et émis, par l'intermédiaire du casque de l'utilisateur, indiquant la valeur de la touche (20). Lorsque le deuxième dispositif de détection détecte un deuxième déplacement ou mouvement du doigt, à partir de la dernière position, l'agencement d'authentification attribue la valeur de la deuxième touche (20) de la « chaîne de touches », par exemple « 7 », à la position du doigt et un son ou un signal audio préenregistré correspondant à la touche « 7 » est récupéré dans l'agencement audio et est émis, par l'intermédiaire du casque de l'utilisateur, indiquant la valeur de la touche (20), et ainsi de suite jusqu'à ce que l'utilisateur choisisse et valide une valeur donnée.

Dans certains modes de réalisation, l'agencement d'authentification comprend un module de désignation de touches (106) qui génère une liste de touches comprenant des informations concernant chaque touche (20) de la « chaîne de touches » et la position associée, ladite liste de touches étant réutilisée par ledit agencement d'authentification si l'utilisateur déplaçant son doigt dans une direction ou une orientation donnée retourne à une position précédente ou dans une autre direction de manière à corriger ou changer un choix de touche (20).

Dans certains modes de réalisation, l'agencement d'authentification comprend un programme qui détermine, en temps réel, à partir des informations contenues dans la liste de touches, la direction du doigt se déplaçant sur l'écran afin de vérifier si l'utilisateur déplace ledit doigt en avant ou en arrière ou dans n'importe quelle orientation.

Dans certains modes de réalisation, le terminal portable de paiement ou de point de vente (1) comprend un dispositif de comptage (16) connecté à l'agencement d'authentification (12) et à la deuxième mémoire (15) du terminal (1), ledit dispositif de comptage (16) comptant le nombre de chiffres mémorisés dans la deuxième mémoire (15) et, lorsque ledit nombre de comptage correspond à une valeur prédéterminée enregistrée et représentant le nombre de chiffres du PIN/de la SNL, émettant un signal vers ledit agencement d'authentification (12) de manière à exécuter le processus d'authentification.

Dans certains modes de réalisation, le premier dispositif de détection est un commutateur électromécanique.

Dans certains modes de réalisation, le premier dispositif de détection est un capteur.

La présente invention concerne également un procédé pour l'identification d'un utilisateur malvoyant dans un dispositif comprenant un terminal (1) comme décrit ci-dessus (dans la présente demande).

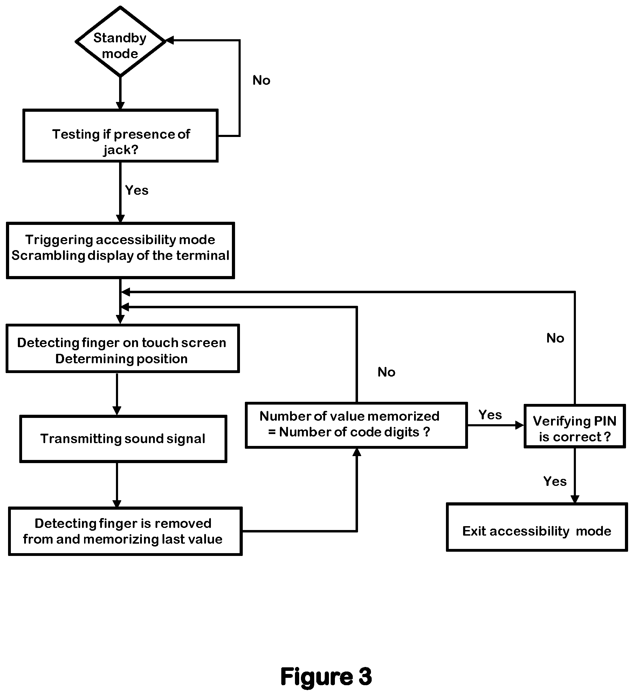

Dans certains modes de réalisation, le procédé pour l'identification sécurisée d'un titulaire de carte avec un terminal portable de paiement ou de point de vente (1) comme décrit ci-dessus comprend au moins les étapes (figure 3) :
- de détection de la présence d'une fiche enfichée dans le connecteur du terminal (1) pour connecter un casque de titulaire de carte ;
- de déclenchement de l'exécution d'un mode d'accessibilité permettant au titulaire de carte de s'identifier ;
- de détection de la position du doigt du titulaire de carte sur l'écran (14) à chaque fois que l'écran (14) est touché par le titulaire de carte ;
- de brouillage et de maintien de l'écran en noir pendant la séquence du mode d'accessibilité ;
le procédé étant caractérisé en ce qu'il comprend les étapes :
- de génération d'une « chaîne de touches » comprenant un ensemble de touches (20) ne devant pas être affichées à des positions sur l'écran (14) du terminal (1) pour l'entrée du PIN/de la SNL ;
- de détection de la longueur ou de l'orientation du déplacement du doigt sur l'écran et de transmission d'un signal correspondant à la longueur d ou à l'angle d'orientation pour indiquer qu'un déplacement a lieu ou non en fonction de la valeur de ladite longueur d ou dudit angle d'orientation comparée à une valeur de seuil mémorisée ;
- de récupération, lors de la réception d'un signal indiquant un déplacement, dans le « fichier de chaînes » mémorisé, de la « chaîne de touches » de manière à attribuer une valeur de touche correspondant à la longueur d ou à l'angle d'orientation du déplacement du doigt, et de sélection, parmi les signaux audio préenregistrés correspondant à chaque touche de la « chaîne de touches », du son correspondant à la touche attribuée au déplacement et d'émission de celui-ci par l'intermédiaire du connecteur jack vers le casque du titulaire de casque ;
- de réitération des étapes de détection et de récupération jusqu'à ce que le doigt soit retiré de l'écran (14) ;
- de mémorisation de la dernière valeur lors du retrait du doigt en tant que chiffre du code PIN/de la SNL.

Dans certains modes de réalisation, le procédé pour l'identification sécurisée comprend également au moins les étapes :
- de génération d'un ensemble de données correspondant à diverses positions sur l'écran (14) ;
- de génération de la « chaîne de touches » à un emplacement de l'écran sur la base d'un sous-ensemble de l'ensemble de données de diverses positions généré.

Dans certains modes de réalisation, l'étape de détection de la position du doigt sur l'écran (14) comprend au moins la capture et l'enregistrement des données liées à la position du doigt lors du contact avec l'écran (14).

La présente demande décrit diverses caractéristiques techniques et divers avantages avec référence aux figures et/ou aux divers modes de réalisation. Les hommes du métier comprendront que les caractéristiques techniques d'un mode de réalisation donné peuvent en fait être combinées avec des caractéristiques d'un autre mode de réalisation, sauf spécification contraire, ou sauf si la combinaison ne fournit pas une solution à au moins l'un des problèmes techniques mentionnés dans la présente demande. De plus, les caractéristiques techniques décrites dans un mode de réalisation donné peuvent être isolées des autres caractéristiques techniques de ce mode de réalisation, sauf spécification contraire.

Il doit être évident aux hommes du métier que la présente invention permet la réalisation de modes de réalisation en de nombreuses formes spécifiques sans s'écarter du domaine d'application de l'invention telle que revendiquée. Par conséquent, les présents modes de réalisation doivent être considérés à titre d'illustration, mais peuvent être modifiés dans le domaine défini par la protection demandée, et l'invention ne doit pas être limitée aux détails donnés ci-dessus.

## Revendications

1. Terminal portable de paiement ou de point de vente (1) avec un connecteur jack pour l'identification sécurisée d'un titulaire de carte, ledit terminal (1) comprenant au moins :
• une première mémoire (13) pour mémoriser une séquence d'instructions représentant un mode d'accessibilité et devant être exécutée par le terminal (1) ;
• un agencement d'authentification (12) pour la mise en oeuvre d'un processus d'authentification pour les titulaires de carte en entrant un code PIN ou une séquence de nombres et de lettres (SNL) ;
• un premier dispositif de détection (11) pour détecter la présence dans le connecteur d'une fiche enfichée pour la connexion d'un casque de titulaire de carte et comprenant un agencement pour produire un signal électrique pour déclencher l'exécution du mode d'accessibilité ;
• un deuxième dispositif de détection (101) pour détecter la position du doigt sur l'écran (14) chaque fois qu'un doigt du propriétaire du casque touche l'écran (14) ;
• un agencement connecté à l'agencement d'authentification (12) pour brouiller et maintenir l'écran (14) en noir pendant toute la séquence du mode d'accessibilité
le terminal (1) étant **caractérisé en ce que** :
• l'agencement d'authentification (12) comprend un programme pour générer au moins une « chaîne de touches » d'un ensemble de « chaîne de touches » mémorisé dans un « fichier de chaînes» du terminal (1), pour l'entrée du code PIN ou de la SNL, chaque « chaîne de touches » comprenant un ensemble de touches (20), lesdites touches (20) étant réparties de manière aléatoire dans ladite « chaîne de touches » ;
• . le deuxième dispositif de détection (101) comprend un agencement pour détecter la longueur, d, du déplacement du doigt sur l'écran et est connecté à l'agencement d'authentification (12) de manière à transmettre un signal correspondant à la longueur d pour indiquer qu'un déplacement a lieu ou non en fonction de la valeur de ladite longueur d comparée à une valeur seuil mémorisée ;
• . l'agencement d'authentification comprend un module de tri pour récupérer, lors de la réception du signal indiquant un déplacement, dans le « fichier de chaînes » mémorisé, ladite « chaîne de touches » de manière à attribuer une valeur de touche correspondant à la longueur d du déplacement du doigt, et est connecté à un agencement audio (17) du terminal (1) où des signaux audio préenregistrés correspondant à chaque touche de la « chaîne de touches » sont mémorisés, de manière à sélectionner le son correspondant à la touche attribuée au déplacement et l'émettre par l'intermédiaire du connecteur jack vers le casque du titulaire de carte ;
• . il comprend un programme pour réitérer ces actions jusqu'à ce que l'utilisateur écoutant la valeur d'un chiffre ou caractère de son code PIN/de sa SNL retire son doigt de l'écran (14), la dernière valeur, indiquée en tant que retour, est ensuite mémorisée dans une deuxième mémoire (15), incluse dans le terminal (1), en tant que chiffre du code PIN/de la SNL.

2. Terminal portable de paiement ou de point de vente (1) avec un connecteur jack selon la revendication 1, **caractérisé en ce qu'**il comprend un contrôleur (10) comprenant au moins :
• le deuxième dispositif de détection (101) qui est connecté à l'écran (14) du terminal (1) de manière à capturer et enregistrer, dans une troisième mémoire (104), les données liées aux positions du doigt lorsque ledit écran (14) est touché ;
• un dispositif de génération de positions (102), comprenant un agencement pour générer des données correspondant à diverses positions sur l'écran (14), lesdites diverses positions étant enregistrées dans une quatrième mémoire (105) ;
• un processeur (100) et une cinquième mémoire (103) comprenant un ensemble de programmes exécutés sur ledit processeur (100) de manière à éviter que l'écran tactile (14) n'affiche une « chaîne de touches » avec les positions des touches (20) déterminées par les données générées par le dispositif de génération de positions (102) ;
l'ensemble de programmes de la cinquième mémoire dudit contrôleur (10) comprenant au moins :
• un algorithme de comparaison pour comparer les données correspondant aux régions touchées, enregistrées dans la troisième mémoire, avec les données représentatives de chaque emplacement de l'écran générées par le dispositif de génération de positions et enregistrées dans la quatrième mémoire ;
• un algorithme audio pour produire, dans un casque connecté à la fiche, un signal audible correspondant à la valeur de la touche (20) ;
• un premier algorithme d'itération pour réitérer l'algorithme de comparaison et l'algorithme audio jusqu'à ce que l'utilisateur écoutant la valeur qu'il attend retire le doigt de l'écran (14), cette action déclenchant dans la mémoire la mémorisation de ladite valeur en tant que premier chiffre ;
• un deuxième algorithme d'itération pour réitérer en outre le premier algorithme d'itération à chaque fois que l'agencement d'authentification reçoit un nouveau signal de détection de contact et tant que la valeur du nombre de chiffres mémorisée est inférieure à la valeur maximum des nombres de chiffres contenus par le code PIN ou d'identification.

3. Terminal portable de paiement ou de point de vente (1) selon les revendications 1 et 2, **caractérisé en ce que** le premier dispositif de détection (11) est connecté au processeur du contrôleur (10) de manière à transmettre le signal électrique pour déclencher le mode d'accessibilité.

4. Terminal portable de paiement ou de point de vente (1) selon les revendications 1 à 3, **caractérisé en ce que** le processeur du contrôleur est connecté à la première mémoire pour télécharger et exécuter la séquence d'instructions représentant le mode d'accessibilité lors de la réception dudit signal électrique.

5. Terminal portable de paiement ou de point de vente (1) selon les revendications 1 à 4, **caractérisé en ce que** le processeur du contrôleur (10) est connecté à l'agencement d'authentification (12) de manière à lui transmettre un signal d'activation lorsque le mode d'accessibilité est actif, l'agencement d'authentification (12) générant la « chaîne de touches » pour l'identification du titulaire de carte après la réception dudit signal d'activation.

6. Terminal portable de paiement ou de point de vente (1) selon les revendications 1 à 5, **caractérisé en ce que** le contrôleur (10) transmet un ensemble de données, comprenant au moins les valeurs de position générées par le dispositif de génération de positions (102), à l'agencement d'authentification (12), ledit agencement d'authentification (12) générant la « chaîne de touches » à un emplacement de l'écran (14) sur la base dudit ensemble de données.

7. Terminal portable de paiement ou de point de vente selon la revendication 1, **caractérisé en ce que** le deuxième dispositif de détection (101) comprend un agencement pour mesurer le déplacement du doigt sur l'écran à partir d'une position initiale donnée, la longueur du déplacement étant **caractérisée par** la valeur d, ladite longueur d étant comparée à une valeur seuil mémorisée dans ledit deuxième dispositif de détection (101) et, si la longueur d est supérieure à la valeur seuil, un signal est transmis à l'agencement d'authentification pour indiquer qu'il y a un déplacement du doigt, si au contraire, la longueur d est inférieure à la valeur seuil, le deuxième dispositif de détection (101) considère qu'aucun déplacement du doigt n'a lieu et un signal est transmis à l'agencement d'authentification indiquant qu'il n'y a pas de déplacement du doigt.

8. Terminal portable de paiement ou de point de vente (1) selon la revendication 1, **caractérisé en ce que** l'agencement d'authentification (12) est connecté au deuxième dispositif de détection (101) de manière à récupérer une « chaîne de touches » dans le « fichier de chaînes » lorsque ledit deuxième dispositif de détection détecte le doigt sur l'écran (14).

9. Terminal portable de paiement ou de point de vente (1) selon la revendication 7, **caractérisé en ce que**, lorsque ledit deuxième dispositif de détection (101) détecte un déplacement du doigt sur l'écran, ledit agencement d'authentification (12) attribue à la position du doigt une valeur d'une touche (20) de la « chaîne de touches ».

10. Terminal portable de paiement ou de point de vente (1) selon la revendication 1, **caractérisé en ce que** l'agencement d'authentification comprend un module de désignation de touche (106) qui génère une liste de touches comprenant des informations concernant chaque touche (20) de la « chaîne de touches » et la position associée, ladite liste de touches étant réutilisée par ledit agencement d'authentification si l'utilisateur déplaçant son doigt dans une direction donnée retourne à une position précédente ou dans une autre direction de manière à corriger ou changer un choix de touche (20).

11. Terminal portable de paiement ou de point de vente (1) selon la revendication 10, **caractérisé en ce que** l'agencement d'authentification comprend un programme qui détermine, en temps réel, à partir des informations contenues dans la liste de touches, la direction du doigt se déplaçant sur l'écran afin de vérifier si l'utilisateur déplace ledit doigt en avant ou en arrière ou dans n'importe quelle orientation.

12. Terminal portable de paiement ou de point de vente (1) selon la revendication 1, **caractérisé en ce qu'**il comprend un dispositif de comptage (16) connecté à l'agencement d'authentification (12) et à la deuxième mémoire (15) du terminal (1), ledit dispositif de comptage (16) comptant le nombre de chiffres mémorisés dans la deuxième mémoire (15) et, lorsque ledit nombre de comptage correspond à une valeur prédéterminée enregistrée et représentant le nombre de chiffres du PIN/code, émettant un signal vers ledit agencement d'authentification (12) de manière à exécuter le processus d'authentification.

13. Terminal portable de paiement ou de point de vente (1) selon la revendication 1, **caractérisé en ce que** le premier dispositif de détection est un commutateur électromécanique.

14. Terminal portable de paiement ou de point de vente (1) selon la revendication 1, **caractérisé en ce que** le premier dispositif de détection est un capteur.

15. Procédé pour l'identification sécurisée d'un titulaire de carte avec un terminal portable de paiement ou de point de vente (1) selon la revendication 1, ledit procédé comprenant au moins les étapes :
• de détection de la présence d'une fiche enfichée dans le connecteur du terminal (1) pour connecter un casque de titulaire de carte ;
• de déclenchement de l'exécution d'un mode d'accessibilité permettant au titulaire de carte de s'identifier ;
• de détection de la position du doigt du titulaire de carte sur l'écran (14) à chaque fois que l'écran (14) est touché par le titulaire de carte ;
• de brouillage et de maintien de l'écran (14) en noir pendant la séquence du mode d'accessibilité ;
le procédé étant **caractérisé en ce qu'**il comprend les étapes :
• de génération d'une « chaîne de touches » comprenant un ensemble de touches (20) ne devant pas être affichées à des positions sur l'écran (14) du terminal (1) pour l'entrée du PIN/de la SNL ;
• de détection de la longueur du déplacement du doigt sur l'écran et de transmission d'un signal correspondant à la longueur d pour indiquer qu'un déplacement a lieu ou non en fonction de la valeur de ladite longueur d comparée à une valeur de seuil mémorisée ;
• de récupération, lors de la réception d'un signal indiquant un déplacement, dans le « fichier de chaînes » mémorisé, de la
« chaîne de touches » de manière à attribuer une valeur de touche correspondant à la longueur d du déplacement du doigt, et de sélection, parmi les signaux audio préenregistrés correspondant à chaque touche de la « chaîne de touches », du son correspondant à la touche attribuée au déplacement et d'émission de celui-ci par l'intermédiaire du connecteur jack vers le casque du titulaire de casque ;
• de réitération des étapes de détection et de récupération jusqu'à ce que le doigt soit retiré de l'écran (14) ;
• de mémorisation de la dernière valeur lors du retrait du doigt en tant que chiffre du PIN/de la SNL.

16. Procédé pour l'identification sécurisée d'un titulaire de carte selon la revendication 15, **caractérisé en ce qu'**il comprend également au moins les étapes :
. de génération d'un ensemble de données correspondant à diverses positions sur l'écran (14) ;
. de génération de la « chaîne de touches » à un emplacement de l'écran sur la base d'un sous-ensemble de l'ensemble de données de diverses positions généré.

17. Procédé pour l'identification sécurisée d'un titulaire de carte selon la revendication 15, **caractérisé en ce que** l'étape de détection de la position du doigt sur l'écran (14) comprend au moins la capture et l'enregistrement des données liées à la position du doigt lors du contact avec l'écran (14).

## Patentansprüche

1. Tragbares Zahlungs- oder POS (Point Of Sale, Verkaufsstelle)-Terminal (1) mit einer Klinkenbuchse zur sicheren Identifizierung eines Karteninhabers, wobei das Terminal (1) mindestens Folgendes aufweist:
• einen ersten Speicher (13) zum Speichern einer Befehlssequenz, die einen Zugangsmodus darstellt und von dem Terminal (1) ausgeführt werden soll;
• eine Authentifizierungsanordnung (12) zur Durchführung eines Authentifizierungsprozesses für Karteninhaber durch Eingabe eines PIN-Codes oder einer Zahlen- und Buchstabenfolge (SNL);
• eine erste Erfassungsvorrichtung (11) zum Erfassen des Vorhandenseins eines Steckers in der Buchse zum Anschließen eines Karteninhaber-Kopfhörers und aufweisend eine Anordnung zum Erzeugen eines elektrischen Signals zum Auslösen der Ausführung des Zugangsmodus;
• eine zweite Erfassungsvorrichtung (101) zum Erfassen der Position des Fingers auf dem Bildschirm (14) jedes Mal, wenn ein Finger des Kopfhörer-Besitzers den Bildschirm (14) berührt;
• eine mit der Authentifizierungsanordnung (12) verbundene Anordnung zum Stören und Schwarzhalten des Bildschirms (14) während der gesamten Sequenz des Zugangsmodus, wobei das Terminal (1) **dadurch gekennzeichnet ist, dass**:
• die Authentifizierungsanordnung (12) ein Programm zum Erzeugen mindestens einer "Tastenkette" aus einem Satz von "Tastenketten", die in einer "Kettendatei" des Terminals (1) gespeichert sind, für die Eingabe des PIN-Codes oder der SNL umfasst, wobei jede "Tastenkette" einen Satz von Tasten (20) umfasst, wobei die Tasten (20) zufällig in der "Tastenkette" verteilt sind;
• die zweite Erfassungsvorrichtung (101) eine Anordnung zum Erfassen der Länge d der Fingerbewegung auf dem Bildschirm aufweist und mit der Authentifizierungsanordnung (12) verbunden ist, um ein der Länge d entsprechendes Signal zu senden, um anzuzeigen, dass eine Bewegung stattfindet oder nicht, abhängig von dem Wert der Länge d im Vergleich zu einem gespeicherten Schwellenwert;
• die Authentifizierungsanordnung ein Sortiermodul aufweist, um beim Empfang des eine Bewegung anzeigenden Signals aus der gespeicherten "Kettendatei" die "Tastenkette" abzurufen, um einen Tastenwert zuzuweisen, der der Länge d der Fingerbewegung entspricht, (1) und mit einer Audioanordnung (17) des Terminals (1) verbunden ist, in der voraufgezeichnete Audiosignale, die jeder Taste der "Tastenkette" entsprechen, gespeichert sind, um den Ton auszuwählen, der der der Bewegung zugewiesenen Taste entspricht, und über die Klinkenbuchse an den Kopfhörer des Karteninhabers zu senden;
• die Software ein Programm enthält zur Wiederholung dieser Aktionen, bis der Benutzer, der den Wert einer Ziffer oder eines Zeichens seiner PIN/SNL hört, seinen Finger vom Bildschirm (14) nimmt, wobei der letzte Wert, der als Rücksprung angezeigt wird, dann in einem zweiten Speicher (15), der im Terminal (1) enthalten ist, als Ziffer der PIN/SNL gespeichert wird.

2. Tragbares Zahlungs- oder POS-Terminal (1) mit einer Klinkenbuchse nach Anspruch 1, **dadurch gekennzeichnet, dass** es eine Steuerung (10) aufweist, die mindestens Folgendes aufweist:
• die zweite Erfassungsvorrichtung (101), die mit dem Bildschirm (14) des Terminals (1) verbunden ist, um in einem dritten Speicher (104) Daten zu erfassen und zu speichern, die sich auf die Positionen des Fingers beziehen, wenn der Bildschirm (14) berührt wird;
• eine Positionserzeugungsvorrichtung (102), die eine Anordnung zum Erzeugen von Daten aufweist, die verschiedenen Positionen auf dem Bildschirm (14) entsprechen, wobei die verschiedenen Positionen in einem vierten Speicher (105) gespeichert werden;
• einen Prozessor (100) und einen fünften Speicher (103), der einem Satz von Programmen aufweist, die auf dem Prozessor (100) ausgeführt werden, um zu verhindern, dass der Touchscreen (14) eine "Tastenkette" mit den Positionen der Tasten (20) anzeigt, die durch die von der Positionserzeugungsvorrichtung (102) erzeugten Daten bestimmt werden;
• wobei der Satz von Programmen im fünften Speicher des Controllers (10) mindestens Folgendes umfasst:
• einen Vergleichsalgorithmus zum Vergleichen der im dritten Speicher gespeicherten Daten, die den betroffenen Regionen entsprechen, mit den von der Positionserzeugungsvorrichtung erzeugten und im vierten Speicher gespeicherten Daten, die für jede Stelle auf dem Bildschirm repräsentativ sind;
• einen Audioalgorithmus, um in einem an der Buchse angeschlossenen Kopfhörer ein hörbares Signal zu erzeugen, das dem Wert der Berührung (20) entspricht;
• einen ersten Iterationsalgorithmus zum Wiederholen des Vergleichsalgorithmus und des Audioalgorithmus, bis der Benutzer, der den von ihm erwarteten Wert hört, den Finger vom Bildschirm (14) nimmt, wobei diese Aktion im Speicher die Speicherung des Wertes als erste Ziffer auslöst;
• einen zweiten Iterationsalgorithmus, um zusätzlich den ersten Iterationsalgorithmus jedes Mal zu wiederholen, wenn die Authentifizierungsanordnung ein neues Berührungserkennungssignal empfängt, und solange der Wert der gespeicherten Anzahl von Ziffern kleiner ist als der Maximalwert der Anzahl von Ziffern, die in der PIN oder dem Identifizierungscode enthalten sind.

3. Tragbares Zahlungs- oder POS-Terminal (1) nach Anspruch 1 und 2, **dadurch gekennzeichnet, dass** die erste Erfassungsvorrichtung (11) mit dem Prozessor der Steuereinheit (10) verbunden ist, um das elektrische Signal zum Auslösen des Zugangsmodus zu übertragen.

4. Tragbares Zahlungs- oder POS-Terminal (1) nach den Ansprüchen 1 bis 3, **dadurch gekennzeichnet, dass** der Prozessor der Steuereinheit mit dem ersten Speicher verbunden ist, um die Befehlssequenz, die den Zugangsmodus darstellt, beim Empfang des elektrischen Signals herunterzuladen und auszuführen.

5. Tragbares Zahlungs- oder POS-Terminal (1) nach den Ansprüchen 1 bis 4, **dadurch gekennzeichnet, dass** der Prozessor der Steuereinheit (10) mit der Authentifizierungsanordnung (12) verbunden ist, um ein Aktivierungssignal an diese zu übermitteln, wenn der Zugangsmodus aktiv ist, wobei die Authentifizierungsanordnung (12) die "Tastenkette" zur Identifizierung des Karteninhabers nach dem Empfang des Aktivierungssignals erzeugt.

6. Tragbares Zahlungs- oder POS-Terminal (1) nach Anspruch 1 bis 5, **dadurch gekennzeichnet, dass** die Steuereinheit (10) einen Datensatz, der zumindest die von der Positionserzeugungsvorrichtung (102) erzeugten Positionswerte umfasst, an die Authentifizierungsanordnung (12) übermittelt, wobei die Authentifizierungsanordnung (12) die "Tastenkette" an einer Stelle auf dem Bildschirm (14) auf der Grundlage des Datensatzes erzeugt.

7. Tragbares Zahlungs- oder POS-Terminal nach Anspruch 1, **dadurch gekennzeichnet, dass** die zweite Erfassungsvorrichtung (101) eine Anordnung zum Messen der Bewegung des Fingers auf dem Bildschirm von einer gegebenen Anfangsposition aus umfasst, wobei die Länge der Bewegung durch den Wert d gekennzeichnet ist, wobei die Länge d mit einem in der zweiten Erfassungsvorrichtung (101) gespeicherten Schwellenwert verglichen wird, und, wenn die Länge d größer als der Schwellenwert ist, ein Signal an die Authentifizierungsanordnung gesendet wird, um anzuzeigen, dass eine Fingerbewegung stattfindet, wenn die Länge d hingegen kleiner als der Schwellenwert ist, die zweite Erfassungsvorrichtung (101) davon ausgeht, dass keine Fingerbewegung stattfindet, und ein Signal an die Authentifizierungsanordnung gesendet wird, das anzeigt, dass keine Fingerbewegung stattfindet.

8. Tragbares Zahlungs- oder POS-Terminal (1) nach Anspruch 1, **dadurch gekennzeichnet, dass** die Authentifizierungsanordnung (12) mit der zweiten Erfassungsvorrichtung (101) verbunden ist, um eine "Tastenkette" aus der "Kettendatei" abzurufen, wenn die zweite Erfassungsvorrichtung den Finger auf dem Bildschirm (14) erfasst.

9. Tragbares Zahlungs- oder POS-Terminal (1) nach Anspruch 7, **dadurch gekennzeichnet, dass**, wenn die zweite Erfassungsvorrichtung (101) eine Bewegung des Fingers über den Bildschirm erfasst, die Authentifizierungsanordnung (12) der Position des Fingers einen Wert einer Taste (20) der "Tastenkette" zuordnet.

10. Tragbares Zahlungs- oder POS-Terminal (1) nach Anspruch 1, **dadurch gekennzeichnet, dass** die Authentifizierungsanordnung ein Tastenbezeichnungsmodul (106) aufweist, das eine Tastenliste erzeugt, die Informationen über jede Taste (20) der "Tastenkette" und die zugehörige Position enthält, wobei die Tastenliste von der Authentifizierungsanordnung wiederverwendet wird, wenn der Benutzer, der seinen Finger in eine bestimmte Richtung bewegt, zu einer vorherigen Position oder in eine andere Richtung zurückkehrt, um eine Auswahl der Taste (20) zu korrigieren oder zu ändern.

11. Tragbares Zahlungs- oder POS-Terminal (1) nach Anspruch 10, **dadurch gekennzeichnet, dass** die Authentifizierungsanordnung ein Programm umfasst, das in Echtzeit aus den in der Tastenliste enthaltenen Informationen die Richtung des sich über den Bildschirm bewegenden Fingers bestimmt, um zu überprüfen, ob der Benutzer den Finger vorwärts oder rückwärts oder in einer beliebigen Ausrichtung bewegt.

12. Tragbares Zahlungs- oder POS-Terminal (1) nach Anspruch 1, **dadurch gekennzeichnet, dass** es eine Zählvorrichtung (16) aufweist, die mit der Authentifizierungsanordnung (12) und dem zweiten Speicher (15) des Terminals (1) verbunden ist, wobei die Zählvorrichtung (16) die Anzahl der in dem zweiten Speicher (15) gespeicherten Ziffern zählt und, wenn die Zählzahl mit einem vorbestimmten Wert übereinstimmt, der gespeichert ist und die Anzahl der Ziffern der PIN/des Codes darstellt, ein Signal an die Authentifizierungsanordnung (12) sendet, um den Authentifizierungsprozess auszuführen.

13. Tragbares Zahlungs- oder POS-Terminal (1) nach Anspruch 1, **dadurch gekennzeichnet, dass** die erste Erfassungsvorrichtung ein elektromechanischer Schalter ist.

14. Tragbares Zahlungs- oder POS-Terminal (1) nach Anspruch 1, **dadurch gekennzeichnet, dass** die erste Erfassungsvorrichtung ein Sensor ist.

15. Verfahren zur sicheren Identifizierung eines Karteninhabers mit einem tragbaren Zahlungs- oder POS-Terminal (1) nach Anspruch 1, wobei das Verfahren mindestens die Schritte umfasst:
• Erkennen des Vorhandenseins eines vollständigen Steckers in der Buchse des Terminals (1), um einen Kopfhörer des Karteninhabers anzuschließen;
• Auslösen der Ausführung eines Zugangsmodus, der es dem Karteninhaber ermöglicht, sich zu identifizieren;
• Erfassen der Position des Fingers des Karteninhabers auf dem Bildschirm (14) jedes Mal, wenn der Bildschirm (14) vom Karteninhaber berührt wird;
• Stören und Schwarzhalten des Bildschirms (14) während der Sequenz des Zugangsmodus;
wobei das Verfahren **dadurch gekennzeichnet ist, dass** es die folgenden Schritte umfasst:
• Erzeugen einer "Tastenkette", die einen Satz von Tasten (20) aufweist, die nicht an Positionen auf dem Bildschirm (14) des Terminals (1) für die Eingabe der PIN/SNL angezeigt werden sollen;
• Erfassen der Länge der Fingerbewegung auf dem Bildschirm und Senden eines Signals, das der Länge d entspricht, um anzuzeigen, dass eine Bewegung stattfindet oder nicht, in Abhängigkeit von dem Wert der Länge d im Vergleich zu einem gespeicherten Schwellenwert;
• Abrufen, bei Empfang eines Signals, das eine Bewegung anzeigt, der "Tastenkette" aus der gespeicherten "Kettendatei", um einen Tastenwert zuzuweisen, der der Länge d der Fingerbewegung entspricht, und Auswählen, aus den voraufgezeichneten Audiosignalen, die jeder Taste der "Tastenkette" entsprechen, des Tons, der der Taste entspricht, die der Bewegung zugewiesen ist, und dieser über die Klinkenbuchse an den Kopfhörer des Kopfhörers übertragen wird;
• Wiederholen der Schritte des Erfassens und Abrufens, bis der Finger vom Bildschirm (14) entfernt wird;
• Speichern des letzten Werts beim Zurückziehen des Fingers als PIN-/SNL-Ziffer.

16. Verfahren zur sicheren Identifizierung eines Karteninhabers nach Anspruch 15, **dadurch gekennzeichnet, dass** es auch mindestens die Schritte umfasst:
• Erzeugen eines Datensatzes, der verschiedenen Positionen auf dem Bildschirm (14) entspricht;
• Erzeugen der "Tastenkette" an einer Stelle des Bildschirms auf der Grundlage einer Teilmenge des erzeugten Datensatzes verschiedener Positionen.

17. Verfahren zur sicheren Identifizierung eines Karteninhabers nach Anspruch 15, **dadurch gekennzeichnet, dass** der Schritt des Erfassens der Position des Fingers auf dem Bildschirm (14) mindestens das Erfassen und Speichern der Daten umfasst, die mit der Position des Fingers bei der Berührung des Bildschirms (14) verbunden sind.

## Claims

1. Portable payment or retail terminal (1) with a jack connector for secure identification of a cardholder, said terminal comprising at least:
• a first memory (13) for storing a sequence of instructions representing an accessibility mode and to be executed by the terminal (1);
• an authentication arrangement (12) for implementing an authentication process for cardholders by entering a PIN code or a sequence of numbers and letters (SNL);
• a first detection device (11) for detecting the presence in the connector of a jack plugged in for connecting a cardholder's headset and comprising an arrangement for producing an electrical signal for triggering the execution of the accessibility mode;
• a second detection device (101) to detect the position of the finger on the screen (14) each time a finger of the headset owner touches the screen (14);
• an arrangement connected to the authentication arrangement (12) for scrambling and maintaining the screen (14) in black during all the sequence of the accessibility mode;
the terminal being **characterized in that**
• the authentication arrangement (12) comprises a program to generate at least a "chain of keys" from a set of "chain of keys" memorized in a "chains file" of the terminal (1), for the code PIN or the SNL entry, each "chain of keys" comprising a set of keys (20), said keys (20) being randomly distributed within said "chain of keys";
• the second detection device (101) comprises an arrangement to detect the length, d, of the finger's displacement on the screen and is connected to the authentication arrangement (12) so as to transmit a signal corresponding to the length d to indicate that a displacement occurs or not depending on the value of said length d compared to a memorized threshold value;
• the authentication arrangement comprises a sorting module to retrieve, when receiving the signal indicating a displacement, in the memorized "chains file", said "chain of keys" so as to attribute a value of key corresponding to the length d of the finger's displacement, and is connected to an audio arrangement (17) of the terminal (1) where preregistered audio signals corresponding to each key of the chain of keys are stored, so as to select the sound corresponding to the key attributed to the displacement and emit said sound through the jack connector towards the cardholder's headset;
• it comprises a program to reiterate these actions until the user listening to the value of a digit or character of his code PIN/ his SNL remove its finger from the screen (14), the last value, indicated as feedback, is then stored in second memory (15), included in the terminal (1), as a digit of the code PIN/ the SNL.

2. Portable payment or retail terminal (1) with jack connector according to claim 1, **characterized in that** it comprises a controller (10) including at least:
• the second detection device (101) which is connected to the screen (14) of the terminal (1) so as to capture and register, in a third memory (104), the data related to the positions of the finger when said screen (14) is touched;
• a position generator device (102), comprising an arrangement to generate data corresponding to various positions on the screen (14), said various positions being registered in a fourth memory (105);
• a processor (100) and a fifth memory (103) comprising a set of programs executed on said processor (100) so as to avoid the touch screen (14) to display a "chain of keys" with the keys (20) positions determined by the data generated by the position generator device (102);
the set of programs of the fifth memory of said controller (10) comprising at least:
• a comparison algorithm to compare the data corresponding to the touched region, registered in the third memory, with the data representative of each location of the screen generated by the position generator device and registered in the fourth memory;
• an audio algorithm to produce in a headset connected to the jack an audible signal corresponding to the value of the key (20);
• a first iteration algorithm to reiterate the comparison algorithm and audio algorithm until the user listening the value he expects remove the finger from the screen (14), such action triggering on the memory the memorization of said value as a first digit;
• a second iteration algorithm to further reiterate the first iteration algorithm each time the authentication arrangement receives a new touch detection signal and as long as the number of digit value memorized is lower than the maximum value of digit numbers contained by the PIN code or the identifying code.

3. Portable payment or retail terminal (1) according to claim 1 and 2, **characterized in that** the first detection device (11) is connected to the processor of the controller (10) so as to transmit the electrical signal for triggering the accessibility mode.

4. Portable payment or retail terminal (1) according to claims 1 to 3, **characterized in that** the processor of the controller is connected to the first memory for downloading and executing the sequence of instructions representing the accessibility mode when receiving the said electrical signal.

5. Portable payment or retail terminal (1) according to claims 1 to 4, **characterized in that** the processor of the controller (10) is connected to the authentication arrangement (12) so as to transmit to it an activation signal when the accessibility mode is on, the authentication arrangement (12) generating the "chain of keys" for identification of the cardholder after receiving said activation signal.

6. Portable payment or retail terminal (1) according to claims 1 to 5, **characterized in that** the controller (10) transmits a set of data, comprising at least the position values generated by the position generator device (102), to the authentication arrangement (12), said authentication arrangement (12) generating the "chain of keys" on a location of the screen (14) base on said set of data.

7. Portable payment or retail terminal (1) according to claim 1, **characterized in that** the second detection device (101) comprises an arrangement to measure the displacement of the finger on the screen from a given initial position, the length of the displacement being **characterized by** the value d, said length d being compared to a threshold value memorized in said second detection device (101) and, if the length d is superior to the threshold value, a signal is transmitted to the authentication arrangement to indicate that there is a displacement of the finger, if on the contrary, the length d is inferior to the threshold value, the second detection device (101) considers that no displacement of the finger occurs and a signal is transmitted to the authentication arrangement indicating that there is no displacement of the finger.

8. Portable payment or retail terminal (1) according to claim 1, **characterized in that** the authentication arrangement (12) is connected to the second detection device (101) so as to retrieve a "chain of keys" in the "chains file" when said second detection device detects the finger on the screen (14).

9. Portable payment or retail terminal (1) according to claim 7, **characterized in that**, when said second detection device (101) detects a displacement of the finger on the screen, said authentication arrangement (12) attributes to the position of the finger a value of a key (20) of the "chain of keys".

10. Portable payment or retail terminal (1) according to claim 1, **characterized in that** the authentication arrangement comprises a key designation module (106) which generates a key list comprising information on each key (20) of the "chain of keys" and related position, said key list being reused by said authentication arrangement if the user moving his finger in a given direction goes back to a previous position or another direction so as to correct or change a choice of key (20).

11. Portable payment or retail terminal (1) according to claim 10, **characterized in that** the authentication arrangement comprises a program which determines, in real time, from the information contained in the key list, the direction of the finger moving on the screen so as to check if the user moves said finger forward or backward or in any orientation.

12. Portable payment or retail terminal (1) according to claim 1, **characterized in that** it comprises a counter device (16) connected to the authentication arrangement (12) and the second memory (15) of the terminal (1), said counter device (16) counting the number of digit memorized in the second memory (15) and, when said count number matches with a predetermined value registered and representing the number of digits of the PIN/SNL, emitting a signal to said authentication arrangement (12) so as to execute the authentication process.

13. Portable payment or retail terminal (1) according to claim 1, **characterized in that** the first detecting device is an electro-mechanical switch.

14. Portable payment or retail terminal (1) according to claim 1, **characterized in that** the first detecting device is a sensor.

15. Method for secure identification of a cardholder with a portable payment or retail terminal (1) according to claim 1, said method comprising at least the steps of:
• detecting the presence of a jack plugged in the connector of the terminal (1) for connecting a cardholder's headset;
• triggering the execution of an accessibility mode allowing the cardholder to identify :
• detecting the position of the finger of the cardholder on the screen (14) each time the screen (14) is touched by the cardholder;
• scrambling and maintaining the screen (14) in black during the sequence of the accessibility mode ;
the method being **characterized in that** it comprises the steps of:
• generating a "chain of keys" comprising a set of keys (20) not to be displayed on positions on the screen (14) of the terminal (1) for the PIN/SNL entry;
• detecting the length of the finger's displacement on the screen and transmitting a signal corresponding to the length d to indicate that a displacement occurs or not depending on the value of said length d compared to a memorized threshold value;
• retrieving, when receiving a signal indicating a displacement, in the memorized "chains file", the "chain of keys" so as to attribute a value of key corresponding to the length d of the finger's displacement, and selecting, among preregistered audio signals corresponding to each key of the "chain of keys", the sound corresponding to the key attributed to the displacement and emitting it through the jack connector towards the cardholder's headset;
• reiterating the detection and retrieving steps until the finger is removed from the screen (14);
• storing the last value when removing the finger as a digit of the PIN/SNL.

16. Method for secure identification of a cardholder according to claim 15, **characterized in that** it also comprises at least the steps of:
• generating a set of data corresponding to various positions on the screen (14),
• generating the "chain of keys" on a location of the screen based on a subset of the generated set of data of various positions.

17. Method for secure identification of a cardholder according to claim 15, **characterized in that** the step of detecting the position of the finger on the screen (14) comprises at least capturing and registering the data related to the position of the finger when touching the screen (14).
